# FASCICULE DE BREVET EUROPEEN

(11) **EP 0 499 556 B1**
(45) Date de publication et mention de la délivrance du brevet: **06.09.1995**
(21) Numéro de dépôt: 92440010.4
(22) Date de dépôt: 24.01.1992
(51) Int. Cl.: A01B 61/04, A01B 15/00, A01B 9/00

(54) **Machine agricole de travail du sol avec un soc de stabilisation latérale perfectionné**
Landwirtschaftliche Bodenbearbeitungsmaschine mit einem verbesserten Schar für die seitliche Stabilisierung
Agricultural soil working machine with an improved share for the lateral stabilization

(30) Priorité: 11.02.1991 FR 9101714
(43) Date de publication de la demande: 19.08.1992
(73) Titulaire: KUHN S.A., F-67700 Saverne (FR)
(72) Inventeur: Kirch, Michel, F-57430 Sarralbe (FR)

(56) Documents cités:
- EP-A- 0 287 487
- FR-A- 1 253 317
- FR-A- 1 461 741
- FR-A- 2 341 252
- US-A- 1 671 427
- US-A- 4 345 659

## Description

La présente invention concerne une machine agricole de travail du sol comportant :
- un châssis,
- un rotor supporté par ledit châssis, muni d'outils de travail du sol et entraîné positivement par une source motrice autour de son axe longitudinal qui s'étend obliquement par rapport à la direction de travail, de sorte qu'à la partie frontale dudit rotor les outils de travail du sol se déplacent vers le sol et qu'au moins un desdits outils de travail du sol est destiné à réaliser une raie,
et
- un soc de stabilisation latérale qui est lié au châssis au moyen d'une structure porteuse et qui comporte une plaque de forme allongée destinée à venir s'appuyer contre la muraille de ladite raie.

Une telle machine agricole de travail du sol est connue dans l'état de la technique (EP-A-0 287 487). Son rotor comporte un arbre central sur lequel sont agencés des flasques régulièrement espacés les uns des autres. Chaque flasque est équipé d'un disque bombé dont la concavité est dirigée vers l'extrémité du rotor la plus en avant, compte tenu du sens de travail. A la périphérie extérieure de la face postérieure de chaque disque bombé sont agencées des bêches de manière équidistante. Par ailleurs, à chaque disque bombé est associé un décrotteur-versoir correspondant qui est fixé au châssis et qui collabore avec la face antérieure dudit disque bombé. Le disque bombé le plus en arrière, compte tenu du sens de travail, peut ainsi, avec ses bêches et le décrotteur-versoir correspondant, réaliser une raie contre la muraille de laquelle vient s'appuyer le soc de stabilisation latérale.

Celui-ci est lié au châssis par l'intermédiaire d'un parallélogramme déformable qui s'étend dans un plan vertical dirigé suivant la direction de travail. Un vérin hydraulique agencé entre le parallélogramme déformable et le châssis permet à l'utilisateur de commander le déplacement en hauteur du soc de stabilisation latérale depuis la cabine du tracteur. Ainsi, l'utilisateur peut aisément intensifier l'action du soc de stabilisation latérale afin de compenser de manière adéquate la poussée latérale engendrée par le rotor. Un dispositif de sécurité permet au soc de stabilisation latérale de s'escamoter lorsqu'il heurte un obstacle qu'il ne peut pas franchir.

Le soc de stabilisation latérale, quant à lui, comporte une plaque et une pointe. La plaque a une forme allongée et est destinée à s'appuyer contre la muraille de la raie. A l'avant de la partie inférieure de la plaque est implantée la pointe. Celle-ci s'étend vers l'avant et vers le bas de sorte qu'au travail le soc de stabilisation latérale s'enfonce dans le sol lorsque la machine se déplace dans le sens de travail. Dans une réalisation commercialisée, l'avant de la plaque comporte en sus un décrochement tel qu'au travail la partie avant du décrochement soit la plus éloignée de la muraille. En outre, l'arête frontale de la plaque est verticale à sa partie supérieure et est dirigée vers l'avant et vers le bas à sa partie inférieure. Grâce à cette plaque de forme allongée, la poussée latérale engendrée par le rotor est parfaitement contrée. Par ailleurs, comparé aux disques de stabilisation connus, la forme allongée de la plaque confère au soc de stabilisation latérale un encombrement réduit. En sus, du fait que le ledit soc de stabilisation latérale comporte une pointe, l'utilisateur peut le faire pénétrer aisément dans le sol. Le décrochement de la plaque enfin consolide la muraille de la raie avec les mottes qui se trouvent sur sa trajectoire. Cette machine de travail du sol connue travaille donc de manière satisfaisante dans tous les terrains couramment rencontrés.

Cette machine de travail du sol connue présente cependant un inconvénient dans les sols très pierreux.

En effet, à chaque fois que la pointe du soc de stabilisation latérale accroche une grosse pierre affleurant au fond de la raie, ladite pierre peut être remontée et risque alors d'entraver le bon déroulement des travaux ultérieurs tels que la préparation du lit de semence au moyen d'une herse rotative par exemple et/ou le semis au moyen d'un semoir.

Si la pierre est vraiment très grosse, le dispositif de sécurité provoque l'escamotage du soc de stabilisation latérale. On comprendra que ceci occasionne des pertes de temps importantes dans des terrains infestés de grosses pierres.

Dans le document US-A-1,671,427 est décrite une charme comportant un corps de labour composé d'un versoir et d'un soc et fixé à un étançon. Ce corps de labour est combiné avec un disque qui est lié d'une part au versoir au moyen d'un premier bras s'étendant en regard de l'une des faces du disque, et d'autre part à l'étançon au moyen d'un deuxième bras s'étendant en regard de l'autre face dudit disque. Ce dernier est ainsi guidé en rotation dans les deux bras de sorte à pouvoir tourner dans un plan vertical dirigé suivant la direction de travail. En vue latérale, l'axe de rotation du disque s'étend approximativement à la verticale de la pointe antérieure du soc, tandis que la partie inférieure dudit disque s'étend quelque peu plus bas que l'arête coupante du soc. En vue suivant la direction de travail, ledit disque s'étend à côté du soc. Ce disque est prévu pour remplacer tout simplement le traditionnel contresep qui est destiné à contrer la poussée latérale agissant sur le corps de labour pendant le travail. Parallèlement, ce disque est également destiné à soulever le corps de labour par-dessus un obstacle que ledit corps de labour pourrait rencontrer.

Le but de la présente invention est d'améliorer cette machine agricole de travail du sol en rendant le soc de stabilisation latérale moins sensible aux pierres ou autres obstacles présents au fond de la raie où évolue ledit soc de stabilisation latérale et tout en conservant à celui-ci, lors du passage sur une telle pierre ou un tel obstacle, une capacité suffisante pour contrer les poussées latérales.

A cet effet, la machine agricole de travail du sol selon l'invention est caractérisée en ce que le soc de stabilisation latérale comporte en sus un disque de périphérie circulaire ou quelconque :
- qui est implanté, en partie au moins, à l'avant de ladite plaque de telle sorte qu'en vue de dessus la plaque s'étende au moins sensiblement dans le prolongement du disque,
- dont la partie inférieure s'étend au moins sensiblement au même niveau que la partie inférieure de la plaque,
- qui peut tourner dans un plan au moins sensiblement vertical et dirigé au moins sensiblement suivant la direction de travail,
et
- qui est lié directement ou indirectement à la plaque uniquement au niveau de sa face opposée à sa face au moins sensiblement plane destinée, durant le travail, à s'appuyer contre la muraille de la raie.

Grâce à ce disque qui est implanté, en partie au moins, à l'avant de la plaque et qui peut tourner dans un plan au moins sensiblement vertical et dirigé au moins sensiblement suivant la direction de travail, le soc de stabilisation latérale peut aisément rouler par-dessus les grosses pierres (ou autres obstacles) affleurant au fond de la raie sans les accrocher. Les déclenchements intempestifs qui apparaissaient avec le soc de stabilisation latérale de la machine de travail du sol connue et qui ralentissaient le travail, sont ainsi sinon supprimés du moins fortement réduits.

Parallèlement, le risque de remonter des pierres enfouies au fond de la raie a également été supprimé.

On comprendra du reste que la rotation du disque facilite la progression du soc de stabilisation latérale sur l'horizon cahotique qui est crée au fond de la raie par les pierres qui y affleurent. Ceci réduit l'effort de traction.

Grâce au fait ensuite
- que ce disque s'étende, en vue de dessus, de telle sorte que la plaque se trouve au moins sensiblement dans le prolongement du disque,
- que sa partie inférieure s'étende au moins sensiblement au même niveau que la partie inférieure de la plaque,
et
- qu'il est lié directement ou indirectement à la plaque uniquement au niveau de sa face opposée à sa face au moins sensiblement plane située, durant le travail, en regard de la muraille de la raie,
cette dernière face peut largement s'appuyer contre la muraille durant le travail et participer ainsi à contrer les poussées latérales. La capacité de stabilisation latérale reste donc bonne, même lorsque le soc de stabilisation latérale se soulève pour passer par-dessus une pierre ou un quelconque obstacle enfoui dans le fond de la raie.

Avantageusement, le disque pourra avoir un diamètre extérieur au moins égal à la hauteur de la plaque. Grâce à cette caractéristique, le disque pourra notamment rouler aisément par-dessus des gros obstacles.

Pour faciliter la progression du soc de stabilisation latérale dans la raie, la périphérie extérieure pourra être circulaire et comporter au moins un chanfrein. En outre, l'adjonction de crénelures peut favoriser la rotation du disque.

Selon une caractéristique supplémentaire de l'invention, il peut être prévu que le plan dans lequel peut tourner le disque fasse, en vue de dessus, un angle compris entre 0° et 15° avec le plan vertical dirigé suivant la direction de travail de telle sorte qu'au travail la partie avant du disque soit quelque peu éloignée de la muraille.

Selon une autre caractéristique supplémentaire de l'invention, il peut être prévu que la partie arrière du disque se situe, en vue de dessus et compte tenu du sens de travail, au moins sensiblement dans le voisinage de l'avant de la plaque.

La plaque pourra comporter, à l'avant, un décrochement dont la partie avant sera, au travail, éloignée de la muraille, la partie arrière du disque s'étendent au moins sensiblement dans le voisinage dudit décrochement et, en vue de dessus, entre ledit décrochement de la plaque et la muraille.

La plaque, quant à elle, peut comporter au moins un élément plat destiné à venir en contact avec la muraille de la raie. En sus, la plaque peut comporter un support auquel est (sont) lié(s) ledit (lesdits) élément(s) plat(s) et qui est lié à la structure porteuse. De plus, la hauteur de la plaque sera avantageusement au minimum de 20 centimètres de sorte à pouvoir encaisser la poussée latérale engendrée par le rotor. Une plaque de hauteur inférieure à 20 centimètres risquerait, en effet, de s'enfoncer latéralement dans la muraille sous l'action de la poussée latérale. De ce fait, il est avantageux que dans les conditions normales de travail, la hauteur de la plaque soit au moins sensiblement identique à la hauteur de la muraille. En pratique, une hauteur de la plaque d'environ 34 centimètres est particulièrement avantageuse puisqu'elle correspond à la profondeur moyenne de travail du soc de stabilisation latérale, qui est généralement supérieure à la profondeur de la raie.

Pour éviter une usure prématurée de la plaque, il est également possible, dans l'invention, qu'une pointe soit prévue à l'avant de la partie inférieure de ladite plaque. Cette pointe pourra avantageusement s'étendre au moins sensiblement suivant la direction de travail.

Dans une réalisation, le disque peut être lié indirectement à la plaque au moyen d'un bras de positionnement. Ce dernier sera lié d'une part au disque au moyen d'une articulation cylindrique et d'autre part rigidement, mais de manière démontable, à la plaque.

Dans une autre réalisation, le disque peut être lié au moyen d'une articulation cylindrique directement à l'avant de la plaque.

Selon une autre caractéristique de l'invention, il peut être prévu que le soc de stabilisation latérale soit lié à la structure porteuse au moyen d'une articulation cylindrique d'axe dirigé au moins sensiblement horizontalement et au moins sensiblement perpendiculairement à la direction de travail. De ce fait, le soc de stabilisation latérale pourra pivoter par rapport à la structure porteuse autour dudit axe pour s'adapter au relief du fond de la raie.

Avantageusement, ledit axe s'étendra au moins sensiblement au même niveau que l'axe de rotation du disque.

Il pourra d'ailleurs être prévu qu'au moins une butée limite le pivotement du soc de stabilisation latérale par rapport à la structure porteuse autour dudit axe.

Dans ce cas, il pourra également être prévu que le soc de stabilisation latérale comporte un deuxième disque :
- qui, compte tenu du sens de travail, est implanté derrière l'articulation cylindrique liant le soc de stabilisation latérale à la structure porteuse et près de l'extrémité longitudinale arrière de la plaque,
- dont la partie inférieure est agencée, en vue latérale, lorsque la forme allongée de la plaque s'étend horizontalement, plus bas que la partie inférieure de ladite plaque et au moins sensiblement au même niveau que la partie inférieure du premier disque,
et
- qui est lié à la plaque au moyen d'une articulation cylindrique d'axe dirigé au moins sensiblement horizontalement et au moins sensiblement perpendiculairement à la direction de travail.

Un tel soc de stabilisation latérale pourra rouler sur le fond de la raie à l'aide des deux disques et pivoter autour de l'articulation cylindrique qui le lie à la structure porteuse pour s'adapter au mieux au relief du fond de la raie.

Avantageusement, le diamètre extérieur du deuxième disque pourra être au moins sensiblement égal au diamètre extérieur du premier disque.

L'axe autour duquel peut tourner le premier disque et l'axe autour duquel peut tourner le deuxième disque pourront également être avantageusement au moins sensiblement équidistants de l'axe de l'articulation cylindrique liant le soc de stabilisation latérale à la structure porteuse.

Selon une autre caractéristique supplémentaire de l'invention, il peut être prévu que la structure porteuse comporte un dispositif de sécurité qui permet au soc de stabilisation latérale, lorsqu'il heurte un obstacle, de se dégager de la raie.

Outre, il peut également être prévu que la structure porteuse comporte un quadrilatère déformable dans un plan dirigé vers le haut, qui a au moins sensiblement la forme d'un parallèlogramme et qui peut être déformé par au moins un vérin hydraulique au moyen duquel (desquels) l'utilisateur peut aisément déplacer le soc de stabilisation latérale en hauteur.

D'autres caractéristiques de l'invention apparaissent dans la description suivante de deux exemples non limitatifs de réalisation de l'invention faite en référence au dessin annexé sur lequel ;
- la figure 1 représente une vue de dessus d'une machine agricole de travail du sol selon l'invention liée à un tracteur agricole et placée dans une position de travail ;
- la figure 2 représente une vue en perspective trois quarts avant de ladite machine agricole de travail du sol ;
- la figure 3 représente une vue latérale (suivant la flèche III définie sur la figure 1), à une échelle agrandie, du soc de stabilisation latérale et d'une partie de la structure porteuse ;
- la figure 4 représente une vue de dessus, suivant la flèche IV définie sur la figure 3, du soc de stabilisation latérale et d'une partie de la structure porteuse ;
- la figure 5 représente une vue latérale d'un autre exemple de réalisation de soc de stabilisation latérale lié à une structure porteuse ;
- la figure 6 représente une vue de dessus, suivant la flèche VI définie sur la figure 5, du soc de stabilisation latérale lié à une structure porteuse.

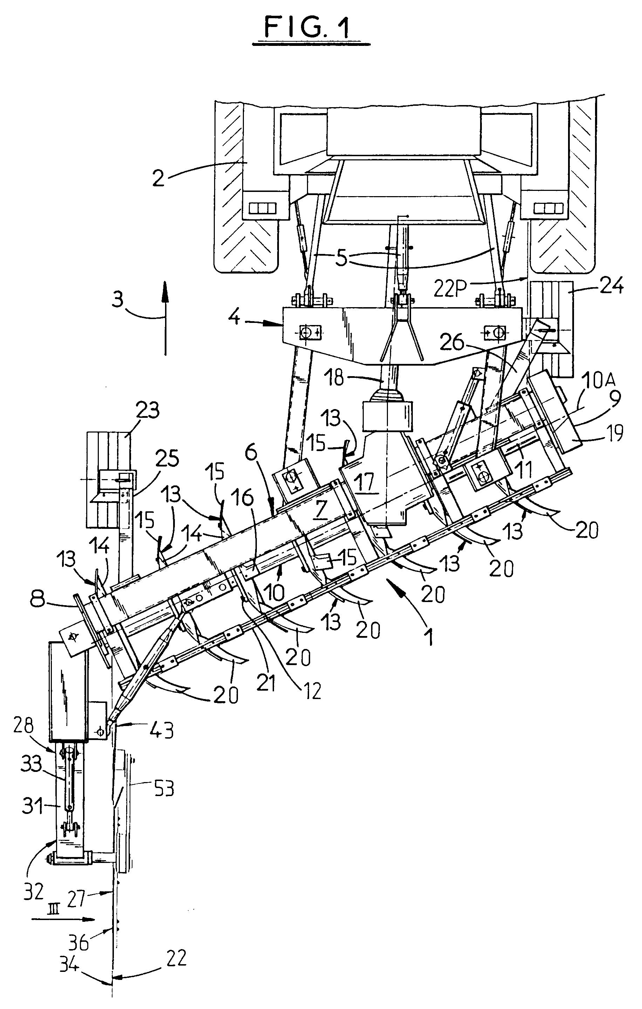

Dans la description, les notions suivantes "avant" et "arrière" sont définies par rapport au sens d'avance (3 ; 103) de la machine de travail du sol (1 ; 101) lors du travail, et les notions "droite" et "gauche" sont définies en regardant ladite machine (1 ; 101) par le dessus (figure 1 ou 4 ; figure 6) et suivant le sens d'avance (3 ; 103) au travail.

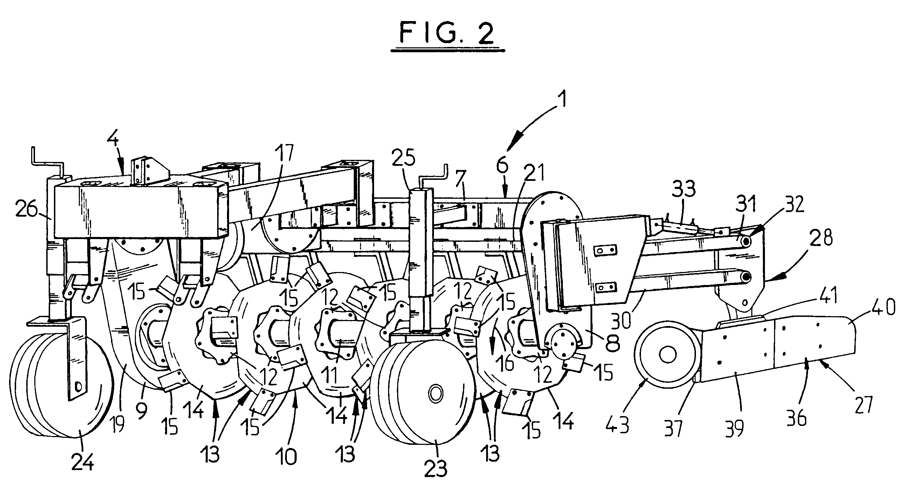

Les figures 1 à 4 montrent une machine agricole de travail du sol (1) selon l'invention. Sur la figure 1, celle-ci est liée à un tracteur agricole (2) au moyen d'une structure d'attelage (4). La partie arrière de cette structure d'attelage (4) est liée au châssis (6) de la machine (1). Ce châssis (6) est composé d'une traverse (7) qui comporte à chacune de ses extrémités longitudinales une paroi latérale (8, 9) s'étendant vers le bas. En vue de dessus, le châssis (6) s'étend obliquement par rapport a la direction de travail (3) de sorte que, dans cet exemple de réalisation, son extrémité droite soit située plus en avant que son extrémité gauche.

Entre les extrémités inférieures des parois latérales (8, 9) est agencé un rotor (10) dont l'axe longitudinal (10A) s'étend au moins sensiblement parallèlement à la traverse (7) du châssis (6).

Le rotor (10), connu de l'homme de l'art, comporte un arbre central (11) sur lequel sont agencés des flasques (12) régulièrement espacés les uns des autres. Chaque flasque (12) est équipé d'outils de travail du sol (13) qui, dans cet exemple de réalisation, comporte un disque bombé (14), dont la concavité est dirigée vers l'extrémité du rotor (10) la plus en avant. A la périphérie extérieure de la face postérieure de chaque disque bombé (14) sont encore agencées des bêches (15) de manière équidistante.

Pendant le travail, le rotor (10) est entraîné positivement en rotation autour de son axe longitudinal (10A) de sorte qu'à sa partie frontale les outils de travail du sol (13) se déplacent vers le sol. A cet effet, le châssis (6) comporte, sensiblement au niveau du plan de symétrie du tracteur (2), un carter de renvoi (17) qui est constitué sous forme de boîte de vitesses. Ce carter de renvoi (17) reçoit, par l'intermédiaire d'un arbre télescopique à joints universels (18) (figure 1), le mouvement de rotation de l'arbre de prise de force (non représenté) du tracteur (2). Le carter de renvoi (17) entraîne alors un carter latéral (19) qui constitue la paroi latérale (9) de l'extrémité droite du châssis (6). Le carter latéral (19) transmet ensuite le mouvement de rotation, d'une façon connue de l'homme de l'art, au rotor (10).

Sur la figure 1, il apparaît également qu'à chaque disque bombé (14) du rotor (10) est associé un décrotteur-versoir (20) correspondant. Ce dernier est fixé à la traverse (7) du châssis (6) au moyen d'une structure de liaison (21) de sorte à pouvoir collaborer avec la face antérieure dudit disque bombé (14).

Au travail, la machine (1) est tirée par le tracteur (2) suivant le sens et la direction de travail (3). Simultanément, la prise de force dudit tracteur (2) entraîne en rotation le rotor (10) dans le sens décrit précédemment. En tournant, les bêches (15) solidaires des disques bombés (14), arrachent chacune une motte de terre. Comme l'axe longitudinal (10A) du rotor (10) s'étend obliquement par rapport à la direction de travail (3), la bêche (15) imprime à la motte arrachée un mouvement qui est dirigé vers l'arrière et du côté de l'extrémité longitudinale du châssis (6) la plus en avant.

Le transport de la motte arrachée par la bêche (15) est assuré par le disque bombé (14). Sa surface concave favorise substantiellement ce transport et commence la rotation de la motte. Celle-ci est ensuite reprise par le décrotteur-versoir (20) associé, qui la dégage du disque bombé (14) et parachève son retournement. Toutes les mottes sont ainsi déplacées vers l'arrière et du côté de l'extrémité longitudinale du châssis (6) la plus en avant. De ce fait, les outils de travail du sol (13) les plus en arrière du rotor (10) génèrent une raie (22) (figure 1). Celle-ci pourra éventuellement être recouverte lors du prochain passage par les mottes que déplacent les outils de travail du sol (13) les plus en avant du rotor (10).

On voit aussi qu'à l'avant de ses extrémités longitudinales, le châssis (6) est muni de deux roues de soutènement (23, 24) qui roulent sur le sol pendant le travail. Ces roues de soutènement (23, 24) sont liées au châssis (6) au moyen d'une structure de support (25, 26) respective constituée de telle sorte que l'on puisse modifier verticalement les positions des roues (23, 24) par rapport au châssis (6).

La roue (24) située la plus en avant du châssis (6), s'étend devant le carter latéral (19) et est destinée à rouler, durant le travail, dans la raie (22P) générée lors du précédent passage.

Derrière l'extrémité la plus en arrière du châssis (6) est, par ailleurs, agencé un soc de stabilisation latérale (27) qui, au travail, s'engage dans la raie (22). Ce soc de stabilisation latérale (27) qui sera décrit plus en détail ultérieurement, est destinè à absorber la poussée latérale créée par l'action du rotor (10) sur le sol.

Une structure porteuse (28) qui s'étend, en vue de dessus, suivant la direction de travail (3), lie le soc de stabilisation latérale (27) au châssis (6). A cet effet, la structure porteuse (28) comporte deux bielles (30, 31) liées de façon articulée d'une part près du châssis (6) et d'autre part près du soc de stabilisation latérale (27), de sorte à former un quadrilatère (32) vertical qui a au moins sensiblement la forme d'un parallélogramme. Ce quadrilatère (32) autorise ainsi au soc de stabilisation latérale (27) un déplacement en hauteur au moins sensiblement parallèle au sol.

Un vérin hydraulique (33) à double effet permet à l'utilisateur de déformer le quadrilatère déformable (32) afin d'amener le soc de stabilisation latérale (27) par exemple dans sa position de transport (non représentée) dans laquelle il est relevé, ou dans une position de travail (figures 1 à 4), dans laquelle il est destiné à venir en contact avec la muraille (34) de la raie (22). Au travail, l'utilisateur peut également, par l'intermédiaire du vérin hydraulique (33), intensifier à tout moment l'action du soc de stabilisation latérale (27) s'il se produit un déplacement latéral de la machine (1) dû par exemple à un changement local de la structure du sol.

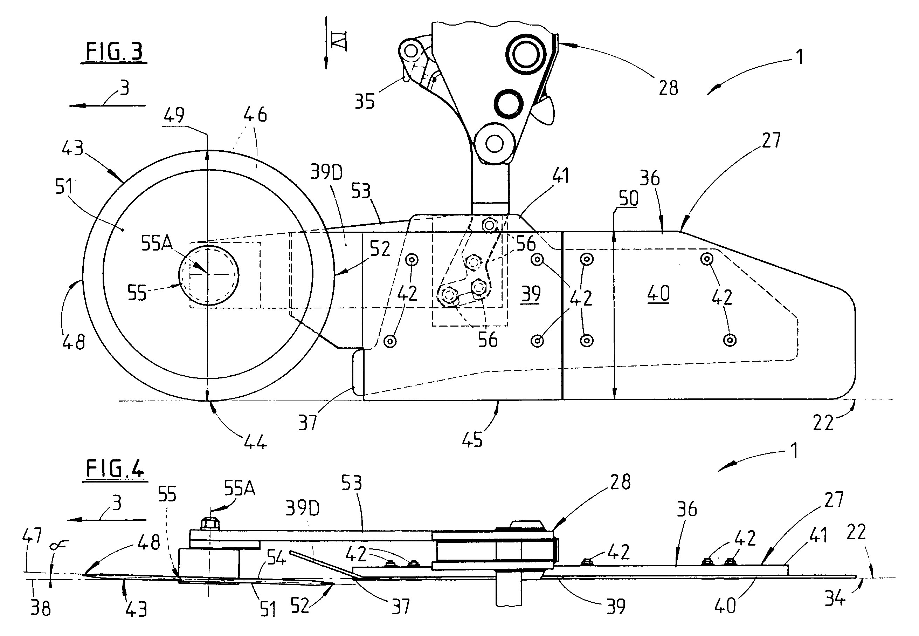

Dans cet exemple de réalisation, la structure porteuse (28) comporte également un dispositif de sécurité mécanique (35) (figure 3), qui permet au soc de stabilisation latérale (27), lorsqu'il heurte un obstacle, de se dégager de la raie (22). Ce dispositif de sécurité (35) est agencé entre le quadrilatère (32) et le soc de stabilisation latérale (27) et peut aisément être réenclenché sous l'effet de la gravité par simple relevage du soc de stabilisation latérale (27) ou de la machine (1).

Sur les figures 3 et 4 apparaît plus particulièrement le soc de stabilisation latérale (27). Celui-ci comporte notamment une plaque (36) et une pointe (37). La plaque (36) s'étend en grande partie, au moins sensiblement parallèlement à un plan vertical (38) dirigé suivant la direction de travail (3). Elle est réalisée au moyen de deux éléments plats (39, 40) et d'un support (41). Les deux éléments plats (39, 40) sont liés côte à côte -l'un derrière l'autre- au support (41) à l'aide de vis d'assemblage (42). La plaque (36) ainsi constituée est destinée à venir s'appuyer par l'intermédiaire desdits éléments plats (39, 40) contre la muraille (34) de la raie (22). A l'avant, la plaque (36) comporte, en sus, un décrochement (39D) qui est tel qu'au travail, la partie avant du décrochement (39D) soit la plus éloignée de ladite muraille (34). Du reste, à l'avant de la partie inférieure (45) de la plaque (36) est agencé la pointe (37) qui, dans cet exemple de réalisation selon l'invention, est formée par l'avant du support (41) et qui s'étend au moins sensiblement suivant la direction de travail (3).

Afin d'éviter que la plaque (36) ne heurte de grosses pierres ou des obstacles équivalents, ce qui déclencherait inévitablement le dispositif de sécurité (35) et interromprait le travail, le soc de stabilisation latérale (27) comporte également un disque (43). Celui-ci s'étend en partie au moins devant la plaque (36), de sorte à protéger cette dernière des obstacles présents dans la raie (22). Avantageusement, le disque (43) est monté tournant par rapport à la plaque (36), et sa partie inférieure (44) s'étend au moins sensiblement au même niveau que la partie inférieure (45) de la plaque (36). Dans cet exemple de réalisation selon l'invention, la périphérie extérieure du disque (43) est circulaire et munie d'au moins un chanfrein (46). De plus, le disque (43) s'étend dans un plan (47) au moins sensiblement vertical qui, en vue de dessus, fait avec un plan vertical (38) dirigé suivant la direction de travail (3), un angle (α) compris entre 0° et 15°, de telle sorte que la partie avant (48) du disque (43) soit destinée à être la plus éloignée de la muraille (34) de la raie (22). Ainsi, au travail, les mottes de terre rencontrées dans la raie (22) par le soc de stabilisation latérale (27) peuvent être déplacées vers la muraille (34) par le disque (43) lorsque ledit angle (α) le permet.

Le diamètre extérieur (49) du disque (43) est, par ailleurs, au moins égal à la hauteur (50) de la plaque (36), ce qui permet au disque (43) de rouler aisément par-dessus les obstacles présents au fond de la raie (22). Il ne risque donc pas d'y avoir de remontée de pierres. En outre, la rotation du disque (43) facilite la progression du soc de stabilisation latérale (27), d'où une réduction de l'effort de traction. De plus, la hauteur (50) de la plaque (36) doit être au minimum de 20 centimètres, de sorte à pouvoir encaisser la poussée latérale engendrée par le rotor (10). Une plaque (36) de hauteur (50) inférieure à 20 centimètres risquerait, en effet, de s'enfoncer latéralement dans la muraille (34) sous l'action de la poussée latérale du rotor (10). De ce fait, il est avantageux que dans les conditions normales de travail, la hauteur (50) de la plaque (36) soit au moins sensiblement identique à la hauteur de la muraille (34). En effet, dans l'exemple représenté sur les figures 3 et 4, la hauteur (50) de la plaque (36) est d'environ 34 centimètres, ce qui correspond en général à la profondeur moyenne de travail du soc de stabilisation latérale (27).

Sur la figure 4, il apparaît également qu'en vue de dessus, la plaque (36) se trouve au moins sensiblement dans le prolongement du disque (43), compte tenu du sens et de la direction de travail (3). Sur cette figure, on voit aussi que la partie arrière (52) du disque (43) s'étend, au travail, entre la muraille (34) et le décrochement (39D) de la plaque (36). En sus, la face (51) du disque (43) qui se trouve en regard de la muraille (34) est au moins sensiblement plane.

Un tel agencement permet donc au disque (43) de s'appuyer contre la muraille (34) et de la consolider.

Du reste, dans cet exemple de réalisation selon l'invention, le disque (43) est lié au soc de stabilisation latérale (27) à l'aide d'un bras de positionnement (53). Celui-ci est lié au centre de la face (54) du disque (43) opposée à celle (51) qui se trouve en regard de la muraille (34), à l'aide d'une articulation cylindrique (55) d'axe géométrique (55A) dirigé au moins sensiblement perpendiculairement au plan (47) du disque (43). D'autre part, le bras de positionnement (53) est lié rigidement au support (41) de la plaque (36) au moyen d'au moins un organe d'assemblage (56).

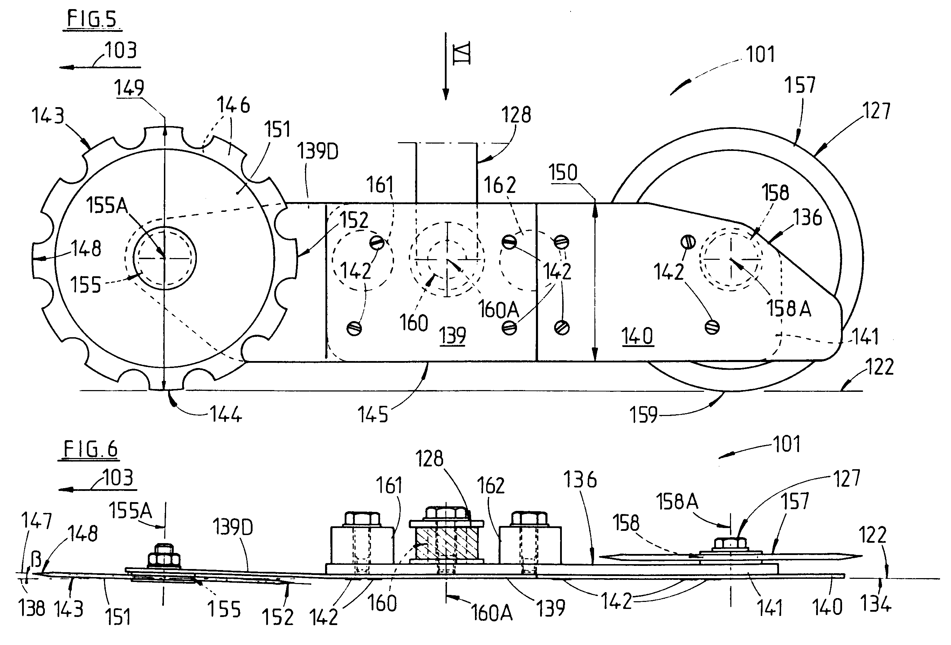

Les figures 5 et 6 montrent un autre exemple de réalisation d'une machine agricole de travail du sol (101) selon l'invention. Celle-ci comporte quasiment les mêmes moyens que la machine agricole de travail du sol (1) précédente et ne sera de ce fait pas redécrite en détail. Seul le soc de stabilisation latérale (127) différe du soc de stabilisation latérale (27) de la machine agricole de travail du sol (1) précédente.

Ce soc de stabilisation latérale (127) comporte une plaque (136) et deux disques (143, 157). Comme dans la machine agricole de travail du sol (1) précédente, la plaque (136) s'étend, en grande partie, au moins sensiblement parallèlement à un plan vertical (138) dirigé suivant la direction de travail (103). Elle est réalisée au moyen de deux éléments plats (139, 140) et d'un support (141). Les deux éléments plats (139, 140) sont liés côte à côte -l'un derrière l'autre- au support (141) à l'aide de vis d'assemblage (142). La plaque (136) ainsi constituée est destinée à venir s'appuyer par l'intermédiaire desdits éléments plats (139, 140) contre la muraille (134) de la raie (122). A l'avant, la plaque (136) comporte, en sus, un décrochement (139D) qui est tel qu'au travail la partie avant du décrochement (139D) soit la plus éloignée de ladite muraille (134). En outre, le décrochement (139D) de la plaque (136) fait, en vue de dessus, avec un plan vertical (138) dirigé suivant la direction de travail (103) un angle d'environ 5°.

Le premier des deux disques (143, 157), quant a lui, s'étend entre la muraille (134) et le décrochement (139D) de la plaque (136). Ce disque (143) est agencé parallèlement audit décrochement (139D) auquel il est lié à l'aide d'une articulation cylindrique (155). L'axe géométrique (155A) de cette articulation cylindrique (155) s'étend au moins sensiblement perpendiculairement audit décrochement (139D) et contient le centre du disque (143). De ce fait, ce disque (143) peut tourner dans un plan vertical (147) qui, en vue de dessus, fait avec un plan vertical (138) dirigé suivant la direction de travail (103), un angle (β) d'environ 5°. Sur la figure 6, il apparaît également que la plaque (136) se trouve au moins sensiblement dans le prolongement du disque (143), compte tenu du sens et de la direction de travail (103). Avantageusement, le diamètre extérieur (149) du disque (143) est par ailleurs au moins égal à la hauteur (150) de la plaque (136). Du reste, la face (151) du disque (143) qui se trouve en regard de la muraille (134) est au moins sensiblement plane.

Bien que dans l'exemple de réalisation selon l'invention qui apparaît sur les figures 5 et 6, la périphérie extérieure du premier disque (143) soit circulaire et crénelée, et que sa partie inférieure (144) s'étende plus bas que la partie inférieure (145) de la plaque (136), il va de soi que les avantages du disque (43) de la machine précédente (1) sont aussi valables pour le premier disque (143) ci-décrit.

Le deuxième disque (157), quant à lui, s'étend près de l'extrémité longitudinale arrière de la plaque (136), à laquelle il est lié par son centre, au moyen d'une articulation cylindrique (158). L'axe géométrique (158A) de cette articulation cylindrique (158) s'étend au moins sensiblement horizontalement et au moins sensiblement perpendiculairement à la direction de travail (103). Comme visible sur les figures 5 et 6, le deuxième disque (157) a au moins sensiblement la même forme et les mêmes dimensions que le premier disque (143). En sus, la partie inférieure (159) du deuxième disque (157) est agencée, en vue latérale, au moins sensiblement au même niveau que la partie inférieure (144) du premier disque (143), donc sous la partie inférieure (145) de la plaque (136). De ce fait, lors du travail, le soc (127) peut rouler sur le fond de la raie (122), ce qui diminue l'effort de traction nécessaire à l'avancement du soc (127). La surface de contact entre la partie inférieure (144, 159) de chaque disque (143, 157) et le sol est en outre très réduite, donc l'utilisateur peut aisément faire pénétrer le soc (127) dans le sol lorsqu'il le désire.

Sur les figures 5 et 6, il apparaît aussi que le support (141) du soc de stabilisation latérale (127) est lié à la structure porteuse (128) au moyen d'une articulation cylindrique (160). L'axe géométrique (160A) de cette articulation cylindrique (160) s'étend au moins sensiblement horizontalement et au moins sensiblement perpendiculairement à la direction de travail (103). De ce fait, au travail, le soc de stabilisation latérale (127) peut s'adapter aisément au relief du fond de la raie (122) par pivotement autour dudit axe géométrique (160A). En particulier, dans cet exemple de réalisation selon l'invention, ledit axe géométrique (160A) s'étend, en sus, au moins sensiblement au même niveau que l'axe géométrique (155A) du premier disque (143) et au moins sensiblement au milieu des axes géométriques (155A, 158A) des deux disques (143, 157).

Dans cet exemple de réalisation selon l'invention, le support (141) du soc de stabilisation latérale (127) est, du reste, muni de deux butées (161, 162) qui sont agencées de part et d'autre de l'articulation (160) permettant au soc de stabilisation latérale (127) de s'adapter au relief du sol. Chaque butée (161, 162) est destinée à venir en contact avec la structure porteuse (128) dès que le soc de stabilisation latérale (127) s'écarte excessivement de sa position de travail dans laquelle sa forme allongée s'étend horizontalement. Ainsi, le travail peut se dérouler sans risque de capotage du soc de stabilisation latérale (127).

Finalement, différentes modifications restent possibles, notamment en ce qui concerne la constitution des divers éléments ou par substitution d'équivalents techniques, sans pour autant sortir du domaine de protection défini dans les revendications.

## Revendications

1. Machine agricole de travail du sol (1; 101) comportant :
- un châssis (6),
- un rotor (10) supporté par ledit châssis (6), muni d'outils de travail du sol (13) et entraîné positivement par une source motrice (2) autour de son axe longitudinal (10A) qui s'étend obliquement par rapport à la direction de travail (3; 103), de sorte qu'à la partie frontale dudit rotor (10) les outils de travail du sol (13) se déplacent vers le sol et qu'au moins un desdits outils de travail du sol (13) est destiné à réaliser une raie (22 ; 122),
et
- un soc de stabilisation latérale (27; 127) qui est lié au châssis (6) au moyen d'une structure porteuse (28 ; 128) et qui comporte une plaque (36 ; 136) de forme allongée destinée à venir s'appuyer contre la muraille (34 ; 134) de ladite raie (22 ; 122),
caractérisée en ce que le soc de stabilisation latérale (27 ; 127) comporte, en sus, un disque 43 ; 143) de périphérie circulaire ou quelconque :
- qui est implanté, en partie au moins, à l'avant de ladite plaque (36 ; 136) de telle sorte qu'en vue de dessus la plaque (36 ; 136) s'étende au moins sensiblement dans le prolongement du disque (43 ; 143),
- dont la partie inférieure (44 ; 144) s'étend au moins sensiblement au même niveau que la partie inférieure (45 ; 145) de la plaque (36 ; 136),
- qui peut tourner dans un plan (47 ; 147) au moins sensiblement vertical et dirigé au moins sensiblement suivant la direction de travail (3 ; 103), et
- qui est lié directement ou indirectement à la plaque (36 ; 136) uniquement au niveau de sa face (54) opposée à sa face (51 ; 151) au moins sensiblement plane destinée, durant le travail à s'appuyer contre la muraille (34 ; 134) de la raie (22 ; 122).

2. Machine agricole de travail du sol selon la revendication 1, caractérisée en ce que le disque (43 ; 143) a un diamètre extérieur (49 ; 149) au moins égal à la hauteur (50 ; 150) de la plaque (36 ; 136).

3. Machine agricole de travail du sol selon la revendication 1 ou 2, caractérisée en ce que la périphérie extérieure du disque (43 ; 143) est circulaire et munie d'au moins un chanfrein (46 ; 146).

4. Machine agricole de travail du sol selon une ou plusieurs des revendications 1 à 3, caractérisée en ce que le plan (47 ; 147) dans lequel peut tourner le disque (43 ; 143) fait, en vue de dessus, un angle (α, β) compris entre 0° et 15° avec le plan vertical (38 ; 138) dirigé suivant la direction de travail (3 ; 103) de telle sorte qu'au travail la partie avant (48 ; 148) du disque (43 ; 143) soit quelque peu éloignée de la muraille (34 ; 134).

5. Machine agricole de travail du sol selon une ou plusieurs des revendications 1 à 4, caractérisée en ce qu'en vue de dessus et compte tenu du sens de travail (3 ; 103), la partie arrière (52 ; 152) du disque (43 ; 143) se situe au moins sensiblement dans le voisinage de l'avant de la plaque (36 ; 136).

6. Machine agricole de travail du sol selon une ou plusieurs des revendications 1 à 5, caractérisée en ce que la plaque (36 ; 136) comporte au moins un élément plat (39, 40 ; 139, 140) destiné à venir en contact avec la muraille (34 ; 134) de la raie (22 ; 122).

7. Machine agricole de travail du sol selon la revendication 6, caractérisée en ce que la plaque (36 ; 136) comporte, en sus, un support (41 ; 141) auquel est (sont) lié(s) ledit (lesdits) élément(s) plat(s) (39, 40 ; 139, 140) et qui est lié à la structure porteuse (28 ; 128).

8. Machine agricole de travail du sol selon une ou plusieurs des revendications 1 à 7, caractérisée en ce que la plaque (36 ; 136) comporte, à l'avant, un décrochement (39D ; 139D) dont la partie avant est, au travail, éloignée de la muraille (34 ; 134), et que la partie arrière (52 ; 152) du disque (43 ; 143) s'étende au moins sensiblement dans le voisinage dudit décrochement (39D ; 139D) et, en vue de dessus, entre ledit décrochement (39D ; 139D) et la muraille (34 ; 134).

9. Machine agricole de travail du sol selon une des revendications 1 à 8, caractérisée en ce qu'à l'avant de la partie inférieure (45) de la plaque (36) est prévue une pointe (37) qui s'étend au moins sensiblement suivant la direction de travail (3).

10. Machine agricole de travail du sol selon une ou plusieurs des revendications 1 à 9, caractérisée en ce que le disque (43) est lié indirectement à la plaque (36) au moyen d'un bras de positionnement (53).

11. Machine agricole de travail du sol selon la revendication 10, caractérisée en ce que le bras de positionnement (53) est lié d'une part au disque (43) au moyen d'une articulation cylindrique (55) et d'autre part rigidement, mais de manière démontable, à la plaque (36).

12. Machine agricole de travail du sol selon une ou plusieurs des revendications 1 à 9, caractérisée en ce que le disque (143) est lié au moyen d'une articulation cylindrique (155) directement à l'avant de la plaque (136).

13. Machine agricole de travail du sol selon une ou plusieurs des revendications 1 à 12, caractérisée en ce que le soc de stabilisation latérale (127) est lié à la structure porteuse (128) au moyen d'une articulation cylindrique (160) d'axe (160A) dirigé au moins sensiblement horizontalement et au moins sensiblement perpendiculairement à la direction de travail (103).

14. Machine agricole de travail du sol selon la revendication 13, caractérisée en ce qu'en vue latérale l'axe (160A) de l'articulation cylindrique (160) liant le soc de stabilisation latérale (127) à la structure porteuse (128) s'étend au moins sensiblement au même niveau que l'axe de rotation (155A) du disque (143).

15. Machine agricole de travail du sol selon la revendication 13 ou 14, caractérisée en ce qu'au moins une butée (161, 162) limite le pivotement du soc de stabilisation latérale (127) par rapport à la structure porteuse (128) autour dudit axe (160A).

16. Machine agricole de travail du sol selon une ou plusieurs des revendications 13 à 15, caractérisée en ce que le soc de stabilisation latérale (127) comporte un deuxième disque (157) :
- qui, compte tenu du sens de travail (103), est implanté derrière l'articulation cylindrique (160) liant le soc de stabilisation latérale (127) à la structure porteuse (128) et près de l'extrémité longitudinale arrière de la plaque (136),
- dont la partie inférieure (159) est agencée, en vue latérale, lorsque la forme allongée de la plaque (136) s'étend horizontalement, plus bas que la partie inférieure (145) de ladite plaque (136) et au moins sensiblement au même niveau que la partie inférieure (144) du premier disque (143),
et
- qui est lié à la plaque (136) au moyen d'une articulation cylindrique (158) d'axe (158A) dirigé au moins sensiblement horizontalement et au moins sensiblement perpendiculairement à la direction de travail (103).

17. Machine agricole de travail du sol selon la revendication 16, caractérisée en ce que le diamètre extérieur du deuxième disque (157) est au moins sensiblement égal au diamètre extérieur (149) du premier disque (143).

18. Machine agricole de travail du sol selon la revendication 16 ou 17, caractérisée en ce qu'en vue latérale, l'axe (155A) autour duquel peut tourner le premier disque (143) et l'axe (158A) autour duquel peut tourner le deuxième disque (157) sont au moins sensiblement équidistants de l'axe (160A) de l'articulation cylindrique (160) liant le soc de stabilisation latérale (127) à la structure porteuse (128).

19. Machine agricole de travail du sol selon une ou plusieurs des revendications 1 à 18, caractérisée en ce que la structure porteuse (28 ; 128) comporte un dispositif de sécurité (35) qui permet au soc de stabilisation latérale (27 ; 127), lorsqu'il heurte un obstacle, de se dégager de la raie (22 ; 122).

20. Machine agricole de travail du sol selon une ou plusieurs des revendications 1 à 19, caractérisée en ce que la structure porteuse (28 ; 128) comporte un quadrilatère (32) déformable dans un plan dirigé vers le haut qui a au moins sensiblement la forme d'un parallélogramme et qui peut être déformé par au moins un vérin hydraulique (33).

## Claims

1. An agricultural machine (1; 101) for working the soil comprising:
- a frame (6),
- a rotor (10) supported by the said frame (6), equipped with tools (13) for working the soil and driven positively by a power source (2) about its longitudinal axis (10A) which extends obliquely in relation to the direction of work (3; 103), in such a way that at the front part of the said rotor (10) the tools (13) for working the soil move towards the soil and that at least one of the said tools (13) for working the soil is intended to make a furrow (22; 122),
and
- a lateral stabilisation chisel share (27; 127) which is connected to the frame (6) by means of a carrying structure (28; 128) and which has a plate (36; 136) of elongated shape intended to rest against the wall (34; 134) of the said furrow (22; 122),
***characterised in that*** the lateral stabilisation chisel share (27; 127) has, in addition, a disc (43; 143) with a circular or some other periphery:
- which is arranged, in part at least, in front of the said plate (36; 136) in such a way that when seen from above the plate (36; 136) extends at least approximately in the extension of the disc (43; 143),
- of which the lower part (44; 144) extends at least approximately at the same level as the lower part (45; 145) of the plate (36; 136),
- which may turn in an at least approximately vertical plane (47; 147) directed at least approximately along the direction of work (3; 103), and
- which is connected directly or indirectly to the plate (36; 136) only in the region of its face (54) opposite to its at least approximately flat face (51; 151) intended to rest, during work, against the wall (34; 134) of the furrow (22; 122).

2. An agricultural machine for working the soil in accordance with claim 1, ***characterised in that*** the disc (43; 143) has an outer diameter (49; 149) at least equal to the height (50; 150) of the plate (36; 136).

3. An agricultural machine for working the soil in accordance with claim 1 or 2, ***characterised in that*** the outer periphery of the disc (43; 143) is circular and equipped with at least one chamfer (46; 146).

4. An agricultural machine for working the soil in accordance with one or several of claims 1 to 3, ***characterised in that*** the plane (47; 147) in which the disc (43; 143) may turn makes, when seen from above, an angle (α, β) of between 0° and 15° with the vertical plane (38; 138) directed along the direction of work (3; 103) in such a way that during work the front part (48; 148) of the disc (43; 143) is slightly distanced from the wall (34; 134).

5. An agricultural machine for working the soil in accordance with one or several of claims 1 to 4, ***characterised in that*** when seen from above and taking account of the direction of work (3; 103), the rear part (52; 152) of the disc (43; 143) is located at least approximately in the vicinity of the front of the plate (36; 136).

6. An agricultural machine for working the soil in accordance with one or several of claims 1 to 5, ***characterised in that*** the plate (36; 136) has at least one flat element (39, 40; 139, 140) intended to come into contact with the wall (34; 134) of the furrow (22; 122).

7. An agricultural machine for working the soil in accordance with claim 6, ***characterised in that*** the plate (36; 136) has, in addition, a support (41; 141) to which is (are) connected the said flat element(s) (39, 40; 139, 140) and which is connected to the carrying structure (28; 128).

8. An agricultural machine for working the soil in accordance with one or several of claims 1 to 7, ***characterised in that*** the plate (36; 136) has, at the front, an offset (39D; 139D) of which the front part is, during work, distanced from the wall (34; 134) and in that the rear part (52; 152) of the disc (43; 143) extends at least approximately in the vicinity of the said offset (39D; 139D) and, when seen from above, between the said offset (39D; 139D) and the wall (34; 134).

9. An agricultural machine for working the soil in accordance with one of claims 1 to 8, ***characterised in that*** at the front of the lower part (45) of the plate (36) is provided a point (37) which extends at least approximately along the direction of work (3).

10. An agricultural machine for working the soil in accordance with one or several of claims 1 to 9, ***characterised in that*** the disc (43) is connected indirectly to the plate (36) by means of a positioning arm (53).

11. An agricultural machine for working the soil in accordance with claim 10, ***characterised in that*** the positioning arm (53) is connected on the one hand to the disc (43) by means of a cylindrical articulation (55) and on the other hand rigidly, but in a removable manner, to the plate (36).

12. An agricultural machine for working the soil in accordance with one or several of claims 1 to 9, ***characterised in that*** the disc (143) is connected by means of a cylindrical articulation (155) directly to the front of the plate (136).

13. An agricultural machine for working the soil in accordance with one or several of claims 1 to 12, ***characterised in that*** the lateral stabilisation chisel share (127) is connected to the carrying structure (128) by means of a cylindrical articulation (160) whose axis (160A) is directed at least approximately horizontally and at least approximately perpendicularly to the direction of work (103).

14. An agricultural machine for working the soil in accordance with claim 13, ***characterised in that*** when seen from the side the axis (160A) of the cylindrical articulation (160) connecting the lateral stabilisation chisel share (127) to the carrying structure (128) extends at least approximately at the same level as the axis of rotation (155A) of the disc (143).

15. An agricultural machine for working the soil in accordance with claim 13 or 14, ***characterised in that*** at least one stop (161, 162) limits the pivoting of the lateral stabilisation chisel share (127) in relation to the carrying structure (128) about the said axis (160A).

16. An agricultural machine for working the soil in accordance with one or several of claims 13 to 15, ***characterised in that*** the lateral stabilisation chisel share (127) has a second disc (157):
- which, taking account of the direction of work (103), is arranged behind the cylindrical articulation (160) connecting the lateral stabilisation chisel share (127) to the carrying structure (128) and close to the rear longitudinal end of the plate (136),
- whose lower pall (159) is arranged, when seen from the side, when the elongated shape of the plate (136) extends horizontally, lower than the lower pall (145) of the said plate (136) and at least approximately at the same level as the lower pall (144) of the first disc (143),
and
- which is connected to the plate (136) by means of a cylindrical articulation (158) whose axis (158A) is directed at least approximately horizontally and at least approximately perpendicularly to the direction of work (103).

17. An agricultural machine for working the soil in accordance with claim 16, ***characterised in that*** the outer diameter of the second disc (157) is at least approximately equal to the outer diameter (149) of the first disc (143).

18. An agricultural machine for working the soil in accordance with claim 16 or 17, ***characterised in that*** when seen from the side, the axis (155A) about which the first disc (143) may turn and the axis (158A) about which the second disc (157) may turn are at least approximately equidistant from the axis (160A) of the cylindrical articulation (160) connecting the lateral stabilisation chisel share (127) to the carrying structure (128).

19. An agricultural machine for working the soil in accordance with one or several of claims 1 to 18, ***characterised in that*** the carrying structure (28; 128) has a safety device (35) which permits the lateral stabilisation chisel share (27; 127), when it strikes an obstacle, to disengage itself from the furrow (22; 122).

20. An agricultural machine for working the soil in accordance with one or several of claims 1 to 19, ***characterised in that*** the carrying structure (28; 128) has a quadrilateral (32) deformable in an upwardly directed plane which has at least approximately the shape of a parallelogram and which may be deformed by at least one hydraulic jack (33).

## Patentansprüche

1. Landwirtschaftliche Bodenbearbeitungsmaschine (1; 101) umfassend:
- einen Rahmen (6),
- einen Rotor (10), der durch den Rahmen (6) getragen ist, mit Bodenbearbeitungswerkzeugen (13) versehen ist und durch eine Motorantriebsquelle (2) um seine sich schräg zur Arbeitsrichtung (3; 103) erstreckende Längsachse (10A) derart positiv angetrieben wird, daß sich an seinem Stirnteil die Bodenbearbeitungswerkzeuge (13) zum Boden hin bewegen und daß mindestens eines der Bodenbearbeitungswerkzeuge (13) dazu bestimmt ist, eine Furche (22; 122) zu bilden,
und
- eine Schar zur seitlichen Stabilisierung (27; 127), die mit dem Rahmen (6) mittels eines Tragwerks (28; 128) verbunden ist und die eine Platte (36; 136) länglicher Form umfaßt, die bestimmt ist, sich gegen die Wand (34; 134) der Furche (22; 122) abzustutzen,
***dadurch gekennzeichnet,*** daß die Schar zur seitlichen Stabilisierung (27; 127) noch eine Scheibe (43; 143) mit kreisrundem oder beliebigem Umfang aufweist:
- die, zumindest zum Teil, vor der Platte (36; 136) derart angeordnet ist, daß, von oben gesehen, die Platte (36; 136) sich zumindest im wesentlichen in der Verlängerung der Scheibe (43; 143) erstreckt,
- deren unterer Teil (44; 144) sich zumindest im wesentlichen auf gleicher Höhe wie der untere Teil (45; 145) der Platte (36; 136) erstreckt,
- die in einer zumindest im wesentlichen vertikalen und zumindest im wesentlichen in Arbeitsrichtung (3; 103) gerichteten Ebene (47; 147) drehen kann, und
- die direkt oder indirekt mit der Platte (36; 136) lediglich im Bereich der Fläche (54) verbunden ist, die der zumindest im wesentlichen ebenen Fläche (51; 151) gegenüberliegt, welche bestimmt ist, sich während der Arbeit gegen die Wand (34; 134) der Furche (22; 122) abzustützen.

2. Landwirtschaftliche Bodenbearbeitungsmaschine nach Anspruch 1, ***dadurch gekennzeichnet,*** daß die Scheibe (43; 143) einen Außendurchmesser (49; 149) zumindest gleich der Höhe (50; 150) der Platte (36; 136) hat.

3. Landwirtschaftliche Bodenbearbeitungsmaschine nach Anspruch 1 oder 2, ***dadurch gekennzeichnet,*** daß der Außenumfang der Scheibe (43; 143) kreisförmig und mit mindestens einer schrägen Abkantung (46; 146) versehen ist.

4. Landwirtschaftliche Bodenbearbeitungsmaschine nach einem oder mehreren der Ansprüche 1 bis 3, ***dadurch gekennzeichnet,*** daß die Ebene (47; 147), in welcher die Scheibe (43; 143) drehen kann, von oben gesehen, einen Winkel (α, β) zwischen 0° und 15° mit der Vertikalebene (38; 138), die in Arbeitsrichtung (3; 103) gerichtet ist, einschließt, so daß bei der Arbeit der vordere Teil (48; 148) der Scheibe (43; 143) ein wenig von der Wand (34; 134) entfernt ist.

5. Landwirtschaftliche Bodenbearbeitungsmaschine nach einem oder mehreren der Ansprüche 1 bis 4, ***dadurch gekennzeichnet,*** daß sich, von oben gesehen und unter Bezugnahme auf die Arbeitsrichtung (3; 103), der hintere Teil (52; 152) der Scheibe (43; 143) zumindest im wesentlichen in der Nähe des Vorderteils der Platte (36; 136) befindet.

6. Landwirtschaftliche Bodenbearbeitungsmaschine nach einem oder mehreren der Ansprüche 1 bis 5, ***dadurch gekennzeichnet,*** daß die Platte (36; 136) zumindest ein flaches Element (39, 40; 139, 140) aufweist, das dazu bestimmt ist, mit der Wand (34; 134) der Furche (22; 122) in Kontakt zu kommen.

7. Landwirtschaftliche Bodenbearbeitungsmaschine nach Anspruch 6, ***dadurch gekennzeichnet,*** daß die Platte (36; 136) noch einen Träger (41; 141) aufweist, mit dem das (die) flache(n) Element(e) (39, 40; 139, 140) verbunden ist (sind) und der mit dem Tragwerk (28; 128) verbunden ist.

8. Landwirtschaftliche Bodenbearbeitungsmaschine nach einem oder mehreren der Ansprüche 1 bis 7, ***dadurch gekennzeichnet,*** daß die Platte (36; 136) vorne eine Abwinkelung (39D; 139D) aufweist, deren vorderer Teil während der Arbeit von der Wand (34; 134) entfernt ist und daß der hintere Teil (52; 152) der Scheibe (43; 143) sich zumindest im wesentlichen in der Nähe der Abwinkelung (39D; 139D) und, von oben gesehen, zwischen der Abwinkelung (39D; 139D) und der Wand (34; 134) erstreckt.

9. Landwirtschaftliche Bodenbeaiteitungsmaschine nach einem der Ansprüche 1 bis 8, ***dadurch gekennzeichnet,*** daß vorne am unteren Teil (45) der Platte (36) eine Spitze (37) vorgesehen ist, die sich zumindest im wesentlichen in Arbeitsrichtung (3) erstreckt.

10. Landwirtschaftliche Bodenbearbeitungsmaschine nach einem oder mehreren der Ansprüche 1 bis 9, ***dadurch gekennzeichnet,*** daß die Scheibe (43) indirekt mit der Platte (36) mittels eines Positionierarms (53) verbunden ist.

11. Landwirtschaftliche Bodenbearbeitungsmaschine nach Anspruch 10, ***dadurch gekennzeichnet, da***ß der Positionierarm (53) einerseits mit der Scheibe (43) mittels eines zylindrischen Gelenks (55) und anderseits fest, jedoch in lösbarer Weise, mit der Platte (36) verbunden ist.

12. Landwirtschaftliche Bodenbearbeitungsmaschine nach einem oder mehreren der Ansprüche 1 bis 9, ***dadurch gekennzeichnet,*** daß die Scheibe (143) mittels eines zylindrischen Gelenks (155) direkt am Vorderteil der Platte (136) verbunden ist.

13. Landwirtschaftliche Bodenbearbeitungsmaschine nach einem oder mehreren der Ansprüche 1 bis 12, ***dadurch gekennzeichnet,*** daß die Schar zur seitlichen Stabilisierung (127) mit dem Tragwerk (128) mittels eines zylindrischen Gelenks (160) mit einer zumindest im wesentlichen horizontalen und zumindest im wesentlichen senkrecht zur Fahrtrichtung (103) gerichteten Achse (160A) verbunden ist.

14. Landwirtschaftliche Bodenbearbeitungsmaschine nach Anspruch 13, ***dadurch gekennzeichnet,*** daß in seitlicher Ansicht die Achse (160A) des zylindrischen Gelenks (160), das die Schar zur seitlichen Stabilisierung (127) mit dem Tragwerk (128) verbindet, sich zumindest im wesentlichen auf gleicher Höhe wie die Drehachse (155A) der Scheibe (143) befindet.

15. Landwirtschaftliche Bodenbearbeitungmaschine nach Anspruch 13 oder 14, ***dadurch gekennzeichnet,*** daß mindestens ein Anschlag (161, 162) die Verschwenkung der Schar zur seitlichen Stabilisierung (127) in bezug auf das Tragwerk (128) um die Achse (160A) begrenzt.

16. Landwirtschaftliche Bodenbearbeitungsmaschine nach einem oder mehreren der Ansprüche 13 bis 15, ***dadurch gekennzeichnet,*** daß die Schar zur seitlichen Stabilisierung (127) eine zweite Scheibe (157) aufweist:
- die, unter Bezugnahme auf die Fahrtrichtung (103) gesehen, hinter dem zylindrischen Gelenk (160), das die Schar zur seitlichen Stabilisierung (127) mit dem Tragwerk (128) verbindet, und nahe dem hinteren Längsende der Platte (136) angeordnet ist,
- deren unterer Teil (159), in seitlicher Ansicht, wenn sich die längliche Form der Platte (136) horizontal erstreckt, tiefer als der untere Teil (145) der Platte (136) und zumindest im wesentlichen auf gleicher Höhe wie der untere Teil (144) der ersten Scheibe (143) liegt,
und
- die mit der Platte (136) mittels eines zylindrischen Gelenks (158) mit einer zumindest im wesentlichen horizontalen und zumindest im wesentlichen senkrecht zur Fährtrichtung (103) gerichteten Achse (158A) verbunden ist.

17. Landwirtschaftliche Bodenbearbeitungsmaschine nach Anspruch 16, ***dadurch gekennzeichnet,*** daß der Außendurchmesser der zweiten Scheibe (157) zumindest im wesentlichen gleich dem Außendurchmesser (149) der ersten Scheibe (143) ist.

18. Landwirtschaftliche Bodenbearbeitungsmaschine nach Anspruch 16 oder 17, ***dadurch gekennzeichnet,*** daß, in seitlicher Ansicht, die Achse (155A), um die die erste Scheibe (143) drehen kann, und die Achse (158A), um die die zweite Scheibe (157) drehen kann, zumindest im wesentlichen einen gleichen Abstand von der Achse (160A) des zylindrischen Gelenks (160), das die Schar zur seitlichen Stabilisierung (127) mit dem Tragwerk (128) verbindet, aufweisen.

19. Landwirtschaftliche Bodenbearbeitungsmaschine nach einem oder mehreren der Ansprüche 1 bis 18, ***dadurch gekennzeichnet,*** daß das Tragwerk (28; 128) eine Sicherheitsvorrichtung (35) aufweist, die der Schar zur seitlichen Stabilisierung (27; 127) gestattet, wenn sie auf ein Hindernis stößt, sich von der Furche (22; 122) zu lösen.

20. Landwirtschaftliche Bodenbearbeitungsmaschine nach einem oder mehreren der Ansprüche 1 bis 19, ***dadurch gekennzeichnet,*** daß das Tragwerk (28; 128) ein in einer nach oben gerichteten Ebene deformierbares Viereck (32) umfaßt, das zumindest im wesentlichen die Form eines Parallelogramms hat und das durch mindestens einen Hydraulikzylinder (33) deformiert werden kann.
